# EUROPÄISCHE PATENTSCHRIFT

(11) **EP 0 376 178 B1**
(45) Veröffentlichungstag und Bekanntmachung des Hinweises auf die Patenterteilung: **02.03.1994**
(21) Anmeldenummer: 89123721.6
(22) Anmeldetag: 22.12.1989
(51) Int. Cl.: H02K 9/08, B23B 9/00

(54) **Werkzeugmaschine mit gekühlter Motorspindel**
Machine tool with motor spindle cooling
Machine-outils à moteur de broche refroidi

(30) Priorität: 30.12.1988 DE 3844337
(43) Veröffentlichungstag der Anmeldung: 04.07.1990
(73) Patentinhaber: INDEX-WERKE GMBH & CO. KG HAHN & TESSKY, D-73726 Esslingen (DE)
(72) Erfinder: Trautmann, Günther Heinrich, D-7312 Kirchheim-Nabern (DE); Link, Helmut Friedrich, D-7307 Aichwald 1 (Schanbach) (DE)
(74) Vertreter: Hoeger, Stellrecht & Partner

(56) Entgegenhaltungen:
- EP-A- 0 084 271
- EP-A- 0 094 680
- DE-A- 3 007 917
- DE-A- 3 428 861
- DE-C- 664 532

## Beschreibung

Die Erfindung betrifft eine Werkzeugmaschine mit einem Maschinengestell, mit einer in dem Maschinengestell drehbar gelagerten Spindeltrommel, mit mehreren in der Spindeltrommel um eine Achse derselben angeordneten Motorspindeln, umfassend einen in eine Arbeitsspindel koaxial zu einer Spindelachse integrierten Hauptmotor, der seinerseits einen Rotor und einen Stator aufweist.

Eine derartige Werkzeugmaschine ist aus der DE-OS 34 28 861 bekannt. Allerdings sind die Motorspindeln gewöhnliche Motorspindeln ohne eine Kühlung.

Bei Werkzeugmaschinen mit Motorspindeln werden als Hauptmotoren insbesondere regelbare Asynchron-Drehstrommotoren eingesetzt, welche sehr hoch belastbar sind und über einen weiten Regelbereich eine gleichbleibende Leistung abgeben. Bei diesen Motorspindeln ist die Temperaturstabilisierung des Hauptmotors besonders kritisch, da der Hauptmotor selbst Bestandteil einer hochgenauen Arbeitsspindel ist, so daß starke Temperaturschwankungen Ungenauigkeiten durch Verformung des Spindelgehäuses verursachen würden. Daher ist bei allen Motorspindeln für eine ausreichende Fremdkühlung zu sorgen, die unabhängig vom Arbeitspunkt des Motors stets die Verlustwärme abführt und die Motortemperatur unterhalb gewünschter Grenzen hält.

Bei den bekannten Werkzeugmaschinen werden die Drehstrommotoren nur im Bereich ihrer Gehäusemantelfläche gekühlt, wobei ein Luftstrom in axialer Richtung über das Gehäuse geleitet wird. Die Abführung der Wärme des Stators erfolgt dabei über Wärmeleitung zum Gehäuse. Zur Verstärkung der Kühlwirkung werden die Gehäuse-Kühlflächen beispielsweise durch Rippen oder einen Doppelmantel vergrößert. Diese Art der Kühlung ist jedoch für präzise Motorspindeln nicht ausreichend.

Die einzige Möglichkeit einer ausreichenden Kühlung ist eine Flüssigkeitskühlung derartiger Motoren, wobei jedoch diese einen großen apparativen Aufwand und insbesondere bei der Zu- und Abführung der Kühlflüssigkeit kaum lösbare Probleme mit sich bringt.

Der Erfindung liegt daher die Aufgabe zugrunde, eine Werkzeugmaschine der gattungsgemäßen Art derart zu verbessern, daß eine einfache und effektive Kühlung der Hauptmotoren der Motorspindel möglich ist.

Diese Aufgabe wird bei einer Werkzeugmaschine mit einer Motorspindel der eingangs beschriebenen Art erfindungsgemäß dadurch gelöst, daß eine Kühlflächen des Hauptmotors gasförmiges Kühlmedium zuführende Kühleinrichtung vorgesehen ist, daß der Stator aus Statorblechen aufgebaut ist, welche ihrerseits die Kühlflächen bilden, daß das gasförmige Kühlmedium unmittelbar längs der Kühlflächen der Statorbleche geführt ist, daß die Kühlflächen in radialer Richtung der Achse der Spindeltrommel verlaufende Kühlkanäle bilden, daß die Kühleinrichtung einen zu einer Außenumfangsseite der Spindeltrommel geführten Kanal und einen von den Hauptmotoren umgebenen mittigen Kanal aufweist und daß die Kanäle des gasförmige Kühlmedium einerseits der Spindeltrommel zu- und andererseits von derselben abführen.

Ein Aspekt der vorliegenden Erfindung ist somit darin zu sehen, daß die Statorbleche selbst die Kühlflächen bilden und dadurch eine weit effektivere Kühlung des Hauptmotors möglich ist als in all den Fällen, in denen ein zusätzlicher Wärmetransport von dem Stator zu zusätzlich angebrachten Kühlrippen eines Kühlmantels erfolgt.

Die besonderen Vorteile der Erfindung treten noch deutlicher zutage, weil mehrere Motorspindeln in einer Spindeltrommel angeordnet sind, die ihrerseits drehbar in einem Maschinengestell gelagert ist. In diesem Fall treten die Vorteile der Erfindung besonders deutlich zutage, da eine Kühlung mehrerer, beispielsweise von 6 oder 8 Motorspindeln in der Spindeltrommel aus Gründen der beengten Platzverhältnisse sehr schwierig ist.

Als besonders zweckmäßig hat es sich bei diesem Ausführungsbeispiel erwiesen, daß die Kühlrippen in radialer Richtung der Spindeltrommel verlaufende Kühlkanäle bilden, da dann das gasförmige Kühlmedium in radialer Richtung zur Achse der Spindeltrommel strömen kann, was besonders günstig ist, wenn eine Beeinträchtigung von Vorder- und Rückseiten der Spindeln durch Mittel zur Führung des gasförmigen Kühlmediums vermieden wird.

Insbesondere zur Vergrößerung der Kühlflächen hat es sich als besonders zweckmäßig erwiesen, daß die Statorbleche eine ungleichförmige radiale Erstreckung aufweisen und dadurch Kühlflächen bilden. Beispielsweise ist es dabei möglich, den Statorblechen selbst beliebige Formen zu geben, welche eine Vergrößerung der Kühlflächen herbeiführen, wobei die Kühlflächen sowohl durch Kanäle in der Gesamtheit der Statorbleche oder auch durch von den Statorblechen gebildeten Oberflächen entstehen können.

Besonders einfach läßt sich die erfindungsgemäße Lösung dadurch erreichen, daß unterschiedliche Statorbleche eine unterschiedliche radiale Erstreckung aufweisen.

Bei den bislang beschriebenen Ausführungsbeispielen wurde nicht näher spezifiziert, wo die Kühlflächen am Stator liegen sollen. Wie bereits erwähnt, könnten die Kühlflächen auch durch Kanäle in der Gesamtheit der Statorbleche gebildet werden. Besonders einfach läßt sich jedoch eine Kühlung dadurch erreichen, daß die Statorbleche auf einer dem Motor abgewandten Außenseite des Stators abstehende Kühlfläche bilden.

Die einfachste Möglichkeit, derartige Kühlflächen zu schaffen, ist dadurch gegeben, daß die Statorbleche sich in radialer Richtung zur Spindelachse erstreckende Kühlrippen bilden.

Diese Kühlrippen können ganz einfach dadurch geschaffen werden, daß sie durch unterschiedliche radiale Ersteckung aufeinanderfolgender Statorbleche gebildet sind, d.h., daß die Statorbleche aufeinanderfolgend entweder eine größere oder eine kleinere radiale Erstreckung aufweisen und somit die Kühlfläche auf der Außenseite des Stators vergrößern. Beispielsweise wäre es denkbar, daß die Statorbleche alternierend einen unterschiedlichen Durchmesser aufweisen; so daß jeweils ein Statorblech mit einem großen Durchmesser auf ein Statorblech mit einem kleinen Durchmesser folgt.

Um jedoch den Kühlrippen eine nennenswerte Stabilität zu verleihen und auch ausreichend große Abstände zwischen den Kühlrippen zu schaffen, um ein Zusetzen des Zwischenraums zwischen den Kühlrippen mit Schmutz zu verhindern und eine ausreichend gute Durchströmung zu gewährleisten, ist es vorteilhaft, wenn die Kühlrippen dadurch gebildet sind, daß aufeinanderfolgende Statorbleche Pakete mit relativ zueinander unterschiedlicher radialer Erstreckung bilden. D.h., daß mehrere Statorbleche gemeinsam dieselbe radiale Erstreckung aufweisen, ein Paket bilden, welchem ein Paket von Statorblechen mit einer anderen radialen Erstreckung folgt.

Die einzelnen Pakete von Statorblechen können somit die unterschiedlichsten Formen von Kühlrippen bilden. Insbesondere wäre jeder denkbare Verlauf von Kühlrippen relativ zur Spindelachse möglich.

Im Rahmen der vorliegenden Erfindung ist es jedoch besonders einfach, wenn sich die Kühlrippen in quer zur Spindelachse verlaufenden Ebenen erstrecken, da dann beispielsweise jeweils gleiche Pakete von Statorblechen mit alternierendem Durchmesser aufeinanderfolgend angeordnet werden können.

Bei den bisher beschriebenen Ausführungsbeispielen wurde nichts darüber ausgesagt, ob die Kühlrippen lediglich kurze Stücke darstellen oder sich über längere Bereiche auf der Außenseite des Stators erstrecken. Insbesondere dann, wenn ein kompakter Aufbau der Motorspindeln gefordert wird, hat es sich als zweckmäßig erwiesen, wenn zwischen den Kühlrippen zumindest teilweise um den Stator umlaufende Kühlkanäle liegen, so daß der Stator nicht allseitig von dem gasförmigen Kühlmedium angeströmt sein muß, sondern es ausreichend ist, den Stator an bestimmten Stellen mit dem gasförmigen Kühlmedium zu beaufschlagen, das dann in den teilweise um den Stator umlaufenden Kühlkanälen diese umströmen und kühlen kann. Die Kühlkanäle können in allen möglichen Richtungen verlaufen. So wäre es beispielsweise denkbar, daß sich die Kühlkanäle schraubenförmig oder zickzackförmig um den Stator winden. Besonders zweckmäßig ist es jedoch, wenn die Kühlkanäle in quer zur Spindelachse verlaufenden Ebenen liegen, da dann eine Queranströmung des Stators zur Kühlung derselben möglich ist, welche sich beim Einsatz der Motorspindel in Werkzeugmaschinen als äußerst günstig erwiesen hat.

Ein besonders bevorzugtes Ausführungsbeispiel der erfindungsgemäßen Werkzeugmaschine sieht vor, daß die Kühleinrichtung so ausgebildet ist, daß das Kühlmedium im Hauptmotor unter Überdruck steht. Dies hat den Vorteil, daß der Hauptmotor als Ganzes davor geschützt ist, daß Schmutz und beispielsweise auch Nebel von Kühlflüssigkeit oder Kühlflüssigkeit selbst in diesen eindringt.

Insbesondere vorteilhaft ist es bei der erfindungsgemäßen Werkzeugmaschine, wenn ein einem Arbeitsraum zugewandtes Spindellager von dem unter Überdruck stehenden Kühlmedium beaufschlagt ist. Dieses Spindellager ist das anfälligste der Motorspindel, da es aufgrund der Tatsache, daß es im wesentlichen dicht bei dem Arbeitsraum liegt, sehr stark dem Eindringen von Nebel und der Kühlflüssigkeit oder Kühlflüssigkeit selbst oder anderen Schmutzpartikeln ausgesetzt ist und daher leicht korrodieren oder anderweitig Schaden nehmen kann. Aus diesem Grund ist es besonders vorteilhaft, wenn sich dieses Spindellager dadurch schützen läßt, daß es ständig von dem unter Überdruck stehenden Kühlmedium beaufschlagt ist, welches einem Eindringen von Schmutz und Kühlflüssigkeit entgegenwirkt.

Optimal ist es, wenn die Spindel mit ihren Spindellagern von dem unter Überdruck stehenden Kühlmedium beaufschlagt ist, so daß bei beiden Spindellagern das unter Überdruck stehenden Kühlmedium dem Eindringen von Schmutz und Flüssigkeit entgegenwirkt und außerdem auch noch eine zusätzliche Temperierung der Spindel selbst erfolgt.

Insbesondere zur Temperierung des Kühlmediums ist es bei allen vorstehend genannten Ausführungsbeispielen von großem Vorteil, wenn die Kühleinrichtung einen Kühler für das dem Hauptmotor zugeführte Kühlmedium aufweist, so daß dieses Kühlmedium vor seinem Eintritt in den jeweiligen Hauptmotor oder die jeweiligen Hauptmotoren auf die gewünschte Temperatur vorgekühlt werden kann und somit andererseits die Kühlflächen der Hauptmotoren kleiner gehalten werden können, was wiederum den Vorteil einer kompakteren Bauweise des Hauptmotors beim Einbau in die Werkzeugmaschine erlaubt und somit konstruktiv große Vorteile, insbesondere bei Werkzeugmaschinen mit mehreren Hauptmotoren in einer Spindeltrommel, mit sich bringt.

Ferner ist es von Vorteil, wenn die Kühleinrichtung ein Gebläse umfaßt, so daß ein zwangsweiser Luftstrom erreicht wird, wobei vorteilhafterweise das Gebläse im Maschinengestell angeordnet ist und somit separat von den Hauptmotoren angeordnet und betrieben werden kann und damit eine unabhängig von der Drehzahl der Hauptmotoren durchführbare Temperierung möglich ist.

Besonders einfach lassen sich sämtliche Hauptmotoren gemeinsam dadurch kühlen, daß der zur Außenumfangsseite der Spindeltrommel geführte Kanal die Außenumfangsseite derselben umschließt und somit sämtliche Hauptmotoren mit Kühlmedium versorgt.

Darüber hinaus ist es außerdem vorteilhaft, wenn der mittige Kanal sich in Richtung der Achse der Spindeltrommel erstreckt.

Da bei allen Ausführungsbeispielen der erfindungsgemäßen Werkzeugmaschine mit mehreren Motorspindeln in einer Spindeltrommel auch Probleme mit der Erreichung einer ausreichend großen Stabilität der Spindeltrommel bestehen, hat es sich außerdem als zweckmäßig erwiesen, wenn die Kühlrippen gleichzeitig zur Abstützung der Statoren in den Spindeltrommeln dienen, so daß hier ebenfalls zusätzliche Maßnahmen nicht in großem Umfang notwendig sind und gleichzeitig eine gute Stabilität des gesamten Aufbaus erreichbar ist.

Ein bevorzugtes Ausführungsbeispiel sieht dabei vor, daß die Statoren der Hauptmotoren der Motorspindeln mit ihren Kühlrippen bereichsweise aneinander anliegen und sich bereits dadurch gegeneinander abstützen, so daß wesentlich verbesserte Möglichkeiten zur Verankerung der Statoren in der Spindeltrommel bestehen.

Hierbei ist es besonders zweckmäßig, wenn die Kühlrippen bereichsweise eine radiale Begrenzungsfläche von Kreissegmenten entsprechender Außenkontur aufweisen, wobei die Größe des Kreissegments durch die Zahl der Spindeln bestimmt ist, also entweder 1/6 oder 1/8 Kreissegment bei 6 bzw. 8 Motorspindeln darstellt.

Darüberhinaus sieht ein vorteilhaftes Ausführungsbeispiel vor, daß sich die Kühlrippen auf Stützleisten eines als Spindeltrommelrahmen dienenden Käfigs abstützen.

Konstruktiv besonders vorteilhaft läßt sich ein Ausführungsbeispiel der erfindungsgemäßen Lösung dann realisieren, wenn die Arbeitsspindel den Rotor trägt und damit insbesondere diesen relativ zum Stator drehbar lagert, wobei dann allerdings eine sehr efficiente Temperierung des Hauptmotors aus den eingangs genannten Gründen erforderlich ist.

Weitere Merkmale und Vorteile der vorliegenden Erfindung sind Gegenstand der nachfolgenden Beschreibung sowie der zeichnerischen Darstellung eines Ausführungsbeispiels. In der Zeichnung zeigen:
- Fig. 1: eine perspektivische Gesamtansicht einer Mehrspindeldrehmaschine als Beispiel für eine erfindungsgemäße Werkzeugmaschine;
- Fig. 2: einen Schnitt längs Linie 2-2 in Fig. 1;
- Fig. 3: eine vergrößerte ausschnittsweise Darstellung des Bereichs A in Fig. 2;
- Fig. 4: einen Schnitt längs Linie 4-4 in Fig. 2.

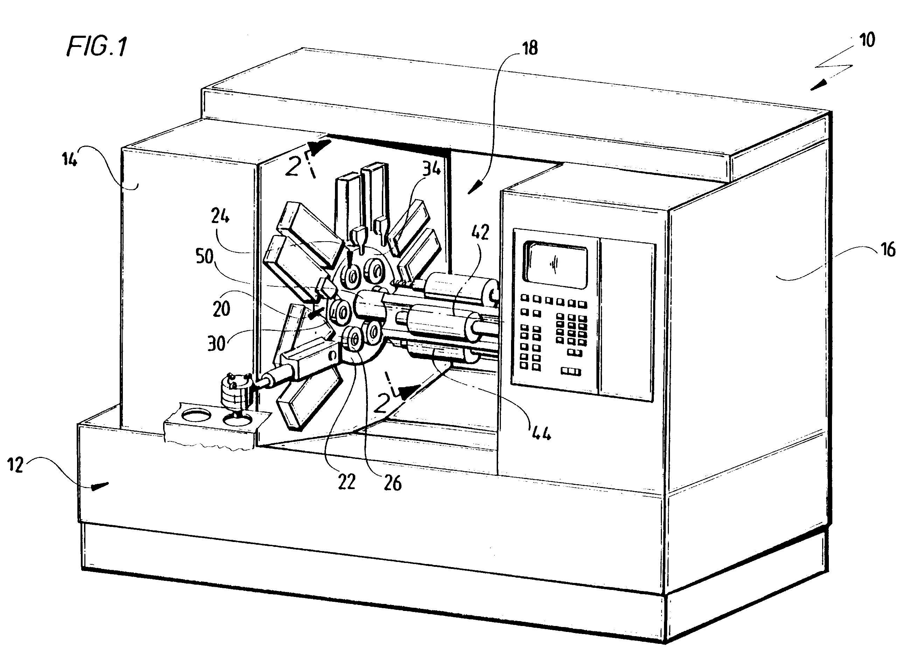

Ein in Fig. 1 als Ganzes mit 10 bezeichneter Mehrspindeldrehautomat als Beispiel für eine erfindungsgemäße Werkzeugmaschine umfaßt ein als Ganzes mit 12 bezeichnetes Gestell mit einem Spindelgehäuse 14 und einem Steuerungsgehäuse 16, zwischen welchen ein als Ganzes mit 18 bezeichneter Arbeitsraum liegt. In dem Spindelgehäuse 14 ist eine als Ganzes mit 20 bezeichnete Spindeltrommel angeordnet, welche mit einer vorderen Stirnseite 22 dem Arbeitsraum 18 zugewandt ist. Die Spindeltrommel 20 umfaßt mehrere, vorzugsweise 6 oder 8 Spindeln 24, die mit ihren Vorderseiten 26 ebenfalls über die vordere Stirnseite 22 überstehen und dem Arbeitsraum 18 zugewandt sind.

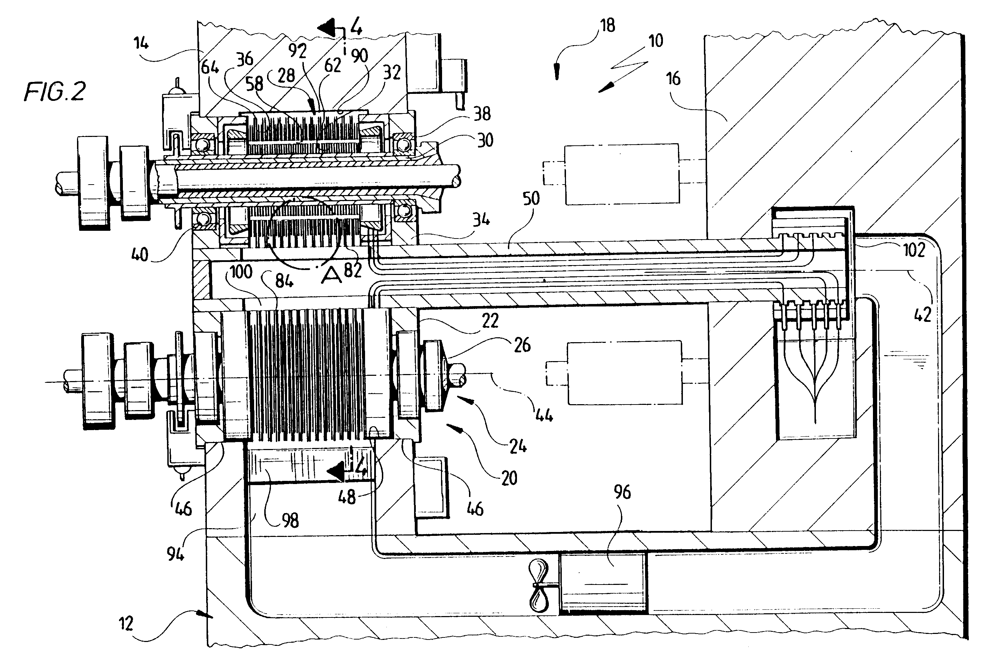

Diese Spindeln 24 sind, wie insbesondere aus Fig. 2 zu ersehen, als Motorspindeln ausgebildet, d.h., daß in die Spindel 24 ein jeweiliger Hauptmotor 28 integriert ist, welcher einen fest auf einem Spindelrohr 30 sitzenden und sich mit diesem drehenden Rotor 32 sowie einen fest in einem Rahmen 34 der Spindeltrommel 20 sitzenden Stator 36 umfaßt.

Das Spindelrohr 30 ist seinerseits mittels eines vorderen Lagers 38 und eines hinteren Lagers 40 in im Rahmen 34 der Spindeltrommeln 2O gehalten, wobei der Rahmen 34 seinerseits um eine Achse 42 der Spindeltrommel 20 drehbar ist, welche ihrerseits wiederum parallel zu Spindelachsen 44 der Spindeln 24 verläuft. Die drehbare Lagerung des Rahmens 34 erfolgt dabei über zur Achse 42 koaxiale Zylindermantelflächen 46 der Spindeltrommel 20, die sich in zur Achse 42 koaxialen Ausnehmungen 48 des Spindelgehäuses 14 abstützen.

An dem Rahmen 34 ist ein zur Achse 42 koaxiales Versorgungsrohr 50 drehfest gehalten, welches über die Stirnseite 22 der Spindeltrommel 20 übersteht, den Arbeitsraum 18 durchsetzt und bis in das Steuerungsgehäuse 16 reicht. Über dieses Versorgungsrohr 50 sind sämtliche Versorgungs- und Steuerungsleitungen für die Hauptmotoren 28, wie beispielsweise Stromzuführungen, geführt.

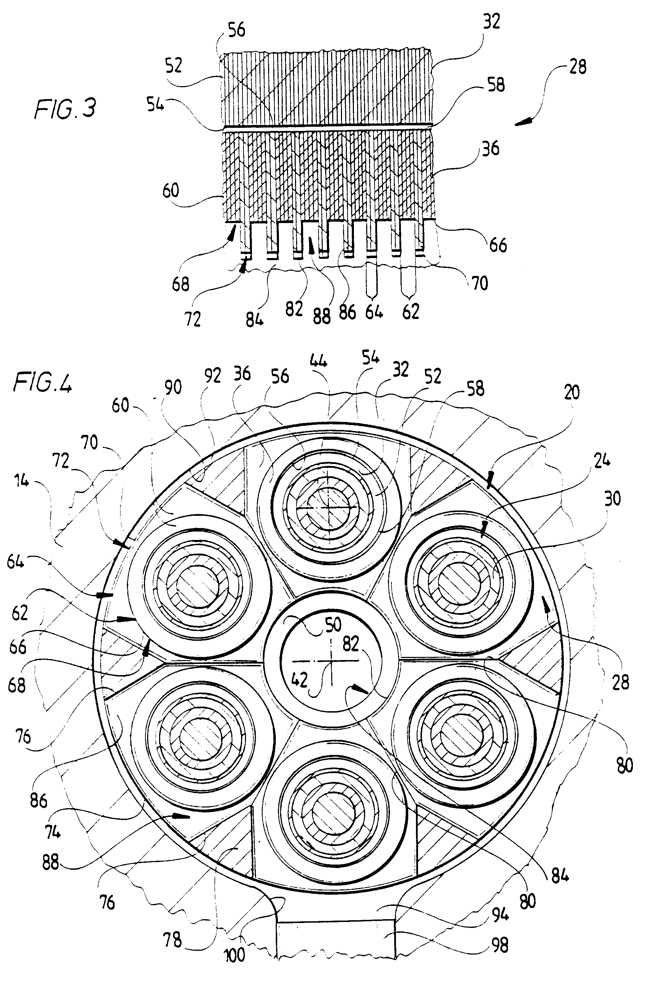

Der Rotor 32 ist, wie in Fig. 3 zu sehen, aus einer Vielzahl hintereinanderliegender Rotorbleche 52 aufgebaut. Zwischen einem Außenumfang 54 des Rotors 32 und einer dieser zugewandten Innenfläche 56 des Stators 36 verbleibt ein kleiner Luftspalt 58.

Der Stator 36 ist seinerseits ebenfalls aus einer Vielzahl von in Richtung der Spindelachse 44 hintereinanderliegenden Statorblechen 60 aufgebaut, welche ungefähr im rechten Winkel zur Spindelachse 44 ausgerichtet sind und rings um den Rotor 32 herum verlaufen.

Um in erfindungsgemäßer Weise eine optimale Kühlung des Stators 36 zu erreichen sind jeweils hintereinanderliegende Statorbleche 60 zu ersten Paketen 62 und zweiten Paketen 64 zusammengefaßt, wobei die Pakete 62 und 64 in Richtung der Spindelachse 44 aufeinanderfolgen und einander abwechseln.

Das erste Paket 62 umfaßt Statorbleche 60, welche von der Innenfläche 56 des Stators 36 sich in radialer Richtung zur Spindelachse 44 erstrecken und mit ihren Außenkanten 66 gemeinsam eine zur Spindelachse 44 koaxiale zylindrische Außenfläche 68 bilden.

Die zweiten Pakete 64 erstrecken sich ebenfalls in radialer Richtung von der Innenfläche 56 des Stators 36, jedoch über die Außenflächen 68 der ersten Pakete 62 hinaus und bilden mit ihren jeweiligen Außenkanten 70 eine den besonderen Verhältnissen der Spindeltrommel 20 angepaßte Außenkontur 72. Diese Außenkontur 72 paßt sich einmal mit einem bezüglich der Achse 42 der Spindeltrommel 20 radial außenliegenden Mantelstück 74 den Zylindermantelflächen 46 an, so daß die Außenkontur 72 der zweiten Pakete 64 nicht über die Spindeltrommel 20 übersteht. Beiderseits des Mantelstücks 74 schließen sich Stützbereiche 76 der Außenkontur 72 an, mit welchen die zweiten Pakete 64 sich an im wesentlichen dreieckförmigen und parallel zur Achse 42 sich erstreckenden Stützleisten 78 des Rahmens 34 anliegen. Diese Stützleisten 78 liegen jeweils zwischen zwei Hauptmotoren 28 und bilden insgesamt ein die Hauptmotoren 28 im Bereich einer Peripherie der Spindeltrommel 20 tragendes Käfig. In Anschluß an die Stützbereiche 76 verläuft die Außenkontur 72 mit Radialbereichen 80 in radialer Richtung zur Achse 42 nach innen bis zu einem Randbereich 82, welcher die beiden Radialbereiche 80 der Außenkontur 72 miteinander verbindet und seinerseits einen Mittelkanal 84 begrenzt. Der Randbereich 82 ist vorzugsweise als Segment einer Mantelfläche eines zur Achse 42 koaxialen Zylinders ausgebildet.

Mit den Radialbereichen 80 liegen die zweiten Pakete 64 jeweils benachbarter Hauptmotoren aneinander an und stützen sich daher gegenseitig ab.

Wie aus Fig. 4 zu erkennen ist dient, somit die Außenkontur 72 der zweiten Pakete 64 der Statorbleche 60 dazu, die Statoren 36 der einzelnen Hauptmotoren einerseits an den durch die Stützleisten 78 gebildeten Käfig des Rahmens 34 der Spindeltrommel 20 abzustützen und andererseits dazu, sich in den Radialbereichen 80 gegenseitig abzustützen, so daß die in Fig. 4 beispielsweise dargestellten insgesamt sechs Statoren 36 innerhalb der Spindeltrommel 20 eine kompakte und stabile Einheit bilden.

Darüberhinaus ist durch die Tatsache, daß die zweiten Pakete 64 stets radial über die Außenflächen 68 der ersten Pakete 62 überstehen durch die überstehenden Bereiche der zweiten Pakete von Statorblechen 60 eine Vielzahl von Kühlrippen 86 geschaffen, welche ihrerseits eine Vielzahl von Kühlkanälen 88 bilden, die zwischen den Kühlrippen 86 liegen und von der Außenfläche 68 der ersten Pakete 62 begrenzt sind. Die Kühlkanäle 88 verlaufen dabei von dem Mantelbereich 64 in radialer Richtung bezüglich der Achse 42 nach innen zu dem Mittelkanal 84 in senkrecht zur Achse 42 stehenden Ebenen rings um die Außenflächen 68 der ersten Pakete 62 herum und somit ebenfalls um den gesamten vom Stator 36 umschlossenen Rotor 32.

Wie insbesondere aus Fig. 2 zu ersehen, ist das Spindelgehäuse 14 mit seinem die Mantelbereiche 74 übergreifenden Teilstück 90 gegenüber den Mantelbereichen 74 der Außenkonturen 72 der zweiten Pakete 64 zurückgesetzt, so daß sich zwischen den Mantelbereichen 74 und den Teilstücken 90 ein Spalt 92 bildet, welcher rings um die Spindeltrommel 20 umläuft. Dieser Spalt 92 mündet in einen Zuluftkanal 94, welcher von einem in einem unteren Bereich des Gestells 12 angeordneten Gebläse 96 von unten in das Spindelgehäuse 14 geführt ist. Unmittelbar vor dem Übergang des Zuluftkanals 94 in den Spalt 92 ist in diesem ein Kühler 98 für die vom Gebläse 96 geführte Luft vorgesehen, so daß die in den Spalt 92 eingeblasene Luft gekühlt werden kann. Diese gekühlte Luft strömt dann in dem Spalt 92 rings um die Spindeltrommel 20 herum und wird in den Kühlkanälen 88 in radialer Richtung zur Achse 42 der Spindeltrommel 20 nach innen zum Mittelkanal 84 geführt, von welchem sie - wie aus Fig. 2 zu ersehen- durch eine Öffnung 100 des Versorgungsrohrs 50 in dieses eintreten kann und längs des Versorgungsrohrs 50 in Richtung des Steuerungsgehäuses 16 abgeführt wird. Vorzugsweise kann die Luft an einem im Steuerungsgehäuse 16 liegenden Ende 102 des Versorgungsrohrs 50 gesammelt und dem Gebläse 96 zugeführt werden, so daß insgesamt ein Kreislauf für Kühlluft vorliegt, in welchem die Statoren 36 sämtlicher Hauptmotoren 28 effektiv gekühlt werden.

Eine erfindungsgemäße Kühlung der Hauptmotoren 28 wird vorzugsweise mit Überdruck des gasförmigen Mediums gefahren, so daß in jeder Spindel 24 ein Überdruck herrscht, welcher vorteilhafterweise einem Eindringen von Schmutz und Kühlflüssigkeit in die Lager 38, 4O, insbesondere in das dem Arbeitsraum 18 zugewandte vordere Lager 38, entgegenwirkt.

## Patentansprüche

1. Werkzeugmaschine mit einem Maschinengestell (12), mit einer im Maschinengestell (12) drehbar gelagerten Spindeltrommel (20), mit mehreren in der Spindeltrommel (20) angeordneten Motorspindeln (24), jeweils umfassend einen in eine Arbeitsspindel (24) koaxial zur Spindelachse integrierten Hauptmotor (28), der seinerseits einen Rotor (32) und einen Stator (36) aufweist,
**dadurch gekennzeichnet**, daß eine Kühlflächen (68, 86) des Hauptmotors (28) gasförmiges Kühlmedium zuführende Kühleinrichtung vorgesehen ist, daß der Stator (36) aus Statorblechen (60) aufgebaut ist, welche ihrerseits die Kühlflächen (68, 86) bilden, daß das gasförmige Kühlmedium unmittelbar längs der Kühlflächen (68, 86) der Statorbleche (60) geführt ist, daß die Kühlflächen (86) in radialer Richtung der Achse (42) der Spindeltrommel (20) verlaufende Kühlkanäle (88) bilden, daß die Kühleinrichtung einen zu einer Außenumfangsseite der Spindeltrommel (20) geführten Kanal (92) und einen von den Hauptmotoren (28) umgebenen mittigen Kanal (84) aufweist und daß die Kanäle (84, 92) das gasförmige Kühlmedium einerseits der Spindeltrommel (20) zu- und andererseits von derselben abführen.

2. Werkzeugmaschine nach Anspruch 1, dadurch gekennzeichnet, daß die Statorbleche (60) eine ungleichförmige radiale Erstreckung bezüglich der Spindelachse (44) aufweisen und dadurch Kühlflächen (68, 86) bilden.

3. Werkzeugmaschine nach Anspruch 2, dadurch gekennzeichnet, daß unterschiedliche Statorbleche (60) eine unterschiedliche radiale Erstreckung aufweisen.

4. Werkzeugmaschine nach einem der voranstehenden Ansprüche, dadurch gekennzeichnet, daß die Statorbleche (60) auf einer dem Rotor (32) abgewandten Außenseite des Stators (36) angeordnete Kühlflächen (68, 86) bilden.

5. Werkzeugmaschine nach einem der Ansprüche 2 bis 4, dadurch gekennzeichnet, daß die Statorbleche (60) sich in radialer Richtung zur Spindelachse (44) erstreckende Kühlrippen (86) bilden.

6. Werkzeugmaschine nach Anspruch 5, dadurch gekennzeichnet, daß die Kühlrippen (86) durch unterschiedliche radiale Erstreckung aufeinanderfolgender Statorbleche (60) gebildet sind.

7. Werkzeugmaschine nach Anspruch 6, dadurch gekennzeichnet, daß die Kühlrippen (86) dadurch gebildet sind, daß aufeinanderfolgende Statorbleche (60) Pakete (62, 64) mit relativ zueinander unterschiedlicher radialer Erstreckung bilden.

8. Werkzeugmaschine nach einem der Ansprüche 5 bis 7, dadurch gekennzeichnet, daß sich die Kühlrippen (86) in quer zur Spindelachse (44) verlaufenden Ebenen erstrecken.

9. Werkzeugmaschine nach einem der Ansprüche 5 bis 8, dadurch gekennzeichnet, daß zwischen den Kühlrippen (86) zumindest teilweise um den Stator (36) umlaufende Kühlkanäle (88) liegen.

10. Werkzeugmaschine nach einem der voranstehenden Ansprüche, dadurch gekennzeichnet, daß die Kühleinrichtung so ausgebildet ist, daß das Kühlmedium im Hauptmotor (28) unter Überdruck steht.

11. Werkzeugmaschine nach Anspruch 10, dadurch gekennzeichnet, daß ein einem Arbeitsraum (18) zugewandtes Spindellager (38) von dem unter Überdruck stehenden Kühlmedium beaufschlagt ist.

12. Werkzeugmaschine nach Anspruch 11, dadurch gekennzeichnet, daß die Spindel (24) mit ihren Spindellagern (38, 40) von dem unter Überdruck stehenden Kühlmedium beaufschlagt ist.

13. Werkzeugmaschine nach einem der voranstehenden Ansprüche, dadurch gekennzeichnet, daß die Kühleinrichtung einen Kühler (98) für das dem Hauptmotor (28) zugeführte Kühlmedium aufweist.

14. Werkzeugmaschine nach einem der voranstehenden Ansprüche, dadurch gekennzeichnet, daß die Kühleinrichtung ein Gebläse (96) umfaßt.

15. Werkzeugmaschine nach Anspruch 14, dadurch gekennzeichnet, daß das Gebläse (96) im Maschinengestell (12) angeordnet ist.

16. Werkzeugmaschine nach einem der voranstehenden Ansprüche, dadurch gekennzeichnet, daß der zur Außenumfangsseite der Spindeltrommel (20) geführte Kanal (92) die Außenumfangsseite derselben umschließt.

17. Werkzeugmaschine nach einem der voranstehenden Ansprüche, dadurch gekennzeichnet, daß der mittige Kanal (84) sich in Richtung der Achse (42) der Spindeltrommel (20) erstreckt.

18. Werkzeugmaschine nach einem der voranstehenden Ansprüche, dadurch gekennzeichnet, daß die Kühlrippen (86) gleichzeitig zur Abstützung der Statoren (36) in der Spindeltrommel (20) dienen.

19. Werkzeugmaschine nach einem der voranstehenden Ansprüche, dadurch gekennzeichnet, daß die Statoren (36) der Hauptmotoren (28) der Motorspindel (24) mit ihren Kühlrippen (86) bereichsweise aneinander anliegen.

20. Werkzeugmaschine nach einem der voranstehenden Ansprüche, dadurch gekennzeichnet, daß die Arbeitsspindel (24) den Rotor (32) trägt.

## Claims

1. Machine tool comprising a machine frame (12), a spindle drum (20) rotatably mounted in the machine frame (12), a plurality of motor spindles (24) arranged in the spindle drum (20), each motor spindle comprising a main motor (28) integrated into a work spindle (24) coaxially to the spindle axis, said main motor comprising for its part a rotor (32) and a stator (36), characterized in that a cooling device supplying gaseous coolant to cooling surfaces (68, 86) of the main motor (28) is provided, that the stator (36) is constructed of stator plates (60) forming, for their part, the cooling surfaces (68, 86), that the gaseous coolant is conducted directly along the cooling surfaces (68, 86) of the stator plates (60), that the cooling surfaces (86) form cooling channels (88) extending in the radial direction of the axis (42) of the spindle drum (20), that the cooling device comprises a channel (92) leading to an outer circumferential side of the spindle drum (20) and a central channel (84) surrounded by the main motors (28) and that the channels (84, 92), on the one hand, feed the gaseous medium to the spindle drum (20) and, on the other hand, conduct it away therefrom.

2. Machine tool as defined in claim 1, characterized in that the stator plates (60) have an unequal radial extension in relation to the spindle axis (44) and thereby form cooling surfaces (68, 86).

3. Machine tool as defined in claim 2, characterized in that different stator plates (60) have a different radial extension.

4. Machine tool as defined in any of the preceding claims, characterized in that the stator plates (60) form cooling surfaces (68, 86) arranged on an outer side of the stator (36) facing away from the rotor (32).

5. Machine tool as defined in any of claims 2 to 4, characterized in that the stator plates (60) form cooling fins (86) extending in radial direction in relation to the spindle axis (44).

6. Machine tool as defined in claim 5, characterized in that the cooling fins (86) are formed by successive stator plates (60) having a different radial extension.

7. Machine tool as defined in claim 6, characterized in that the cooling fins (86) are formed by successive stator plates (60) forming sets (62, 64) having a different radial extension relative to one another.

8. Machine tool as defined in any of claims 5 to 7, characterized in that the cooling fins (86) extend in planes extending transversely to the spindle axis (44).

9. Machine tool as defined in any of claims 5 to 8, characterized in that cooling channels (88) extending at least partially around the stator (36) are located between the cooling fins (86).

10. Machine tool as defined in any of the preceding claims, characterized in that the cooling device is designed such that the coolant in the main motor (28) is under pressure above atmospheric.

11. Machine tool as defined in claim 10, characterized in that a spindle bearing (38) facing a working area (18) is acted upon by the coolant under pressure above atmospheric.

12. Machine tool as defined in claim 11, characterized in that the spindle (24) with its spindle bearings (38, 40) is acted upon by the coolant under pressure above atmospheric.

13. Machine tool as defined in any of the preceding claims, characterized in that the cooling device comprises a cooler (98) for the coolant fed to the main motor (28).

14. Machine tool as defined in any of the preceding claims, characterized in that the cooling device includes a fan (96).

15. Machine tool as defined in claim 14, characterized in that the fan (96) is arranged in the machine frame (12).

16. Machine tool as defined in any of the preceding claims, characterized in that the channel (92) leading to the outer circumferential side of the spindle drum (20) encircles the outer circumferential side thereof.

17. Machine tool as defined in any of the preceding claims, characterized in that the central channel (84) extends in the direction of the axis (42) of the spindle drum (20).

18. Machine tool as defined in any of the preceding claims, characterized in that the cooling fins (86) serve at the same time to support the stators (36) in the spindle drum (20).

19. Machine tool as defined in any of the preceding claims, characterized in that the stators (36) of the main motors (28) of the motor spindles (24) abut on one another with their cooling fins (86) in regions thereof.

20. Machine tool as defined in any of the preceding claims, characterized in that the work spindle (24) bears the rotor (32).

## Revendications

1. Machine-outil comportant un bâti (12), comprenant un tambour porte-broches (20) monté rotatif dans le bâti (12), plusieurs broches motrices (24) disposées dans le tambour (20) porte-broches et dont chacune comprend un moteur principal intégré dans une broche de travail (24) coaxialement à l'axe de la broche et comprenant de son côté un rotor (32) et un stator (36), caractérisée en ce qu'un dispositif de refroidissement est prévu pour diriger un fluide gazeux de refroidissement sur des surfaces de refroidissement (68, 86) du moteur principal (28), en ce que le stator (36) est constitué de tôles statoriques (60) qui forment de leur côté une surface de refroidissement (68, 86), en ce que le fluide gazeux de refroidissement est dirigé directement le long des surfaces de refroidissement (68, 86) des tôles statoriques (60), en ce que les surfaces de refroidissement (86) forment des canaux de refroidissement (88) orientés en direction radiale par rapport à l'axe (42) du tambour (20) porte-broches, en ce que le dispositif de refroidissement comprend un canal (92) orienté vers un côté circonférenciel extérieur du tambour (20) porte-broches et un canal central (84) entouré par les moteurs principaux (28) et en ce que les canaux (84, 92) d'une part dirigent le fluide gazeux de refroidissement sur le tambour (20) porte-broches et d'autre part l'en évacuent.

2. Machine-outil selon la revendication 1, caractérisée en ce que les tôles statoriques (60) ont des étendues radiales différentes par rapport à l'axe (44) des broches et forment ainsi des surfaces de refroidissement (68, 86).

3. Machine-outil selon la revendication 2, caractérisée en ce que des tôles statoriques différentes (60) ont des étendues radiales différentes.

4. Machine-outil selon l'une des revendciations précédentes, caractérisée en ce que les tôles statoriques (60) forment des surfaces de refroidissement (68, 86) disposées sur un côté extérieur du stator (36) qui est tourné à l'opposé du rotor (32).

5. Machine-outil selon l'une des revendications 2 à 4, caractérisée en ce que les tôles statoriques (60) forment des ailettes de refroidissement (86) orientées en direction radiale sur l'axe (44) des broches.

6. Machine-outil selon la revendication 5, caractérisée en ce que les ailettes de refroidissement (86) sont formées par des étendues radiales différentes des tôles statoriques successives (60).

7. Machine-outil selon la revendication 6, caractérisée en ce que les ailettes de refroidissement (86) sont formées par le fait que des tôles statoriques successives (60) forment des paquets (62, 64) ayant des étendues radiales différentes les uns par rapport aux autres.

8. Machine-outil selon l'une des revendications 5 à 7, caractérisée en ce que les ailettes de refroidissement (86) sont orientées dans des plans perpendiculaires à l'axe (44) des broches.

9. Machine-outil selon l'une des revendications 5 à 8, caractérisée en ce que des canaux de refroidissement (88) passant au moins partiellement autour du stator (36) sont situés entre les ailettes de refroidissement (86).

10. Machine-outil selon l'une des revendications précédentes, caractérisée en ce que le dispositif de refroidissement est réalisé de manière que le fluide de refroidissement soit en dépression dans le moteur principal (28).

11. Machine-outil selon la revendication 10, caractérisée en ce qu'un palier de broche (38) tourné vers un espace de travail (18) est balayé par le fluide de refroidissement en dépression.

12. Machine-outil selon la revendication 11, caractérisée en ce que les paliers (38, 40) des broches (24) sont balayés par le fluide de refroidissement en dépression.

13. Machine-outil selon l'une des revendications précédentes, caractérisée en ce que le dispositif de refroidissement comprend un radiateur (98) pour le fluide de refroidissement dirigé sur le moteur principal (28).

14. Machine-outil selon l'une des revendications précédentes, caractérisée en ce que le dispositif de refroidissement comprend un ventilateur (96).

15. Machine-outil selon la revendication 14, caractérisée en ce que le ventilateur (96) est disposé dans le bâti (12) de la machine.

16. Machine-outil selon l'une des revendications précédentes, caractérisée en ce que le canal (92) passant sur le côté circonférentiel extérieur du tambour porte-broches (20) entoure le côté circonférentiel extérieur de ce dernier.

17. Machine-outil selon l'une des revendications précédentes, caractérisée en ce que le canal central (84) est orienté dans la direction de l'axe (42) du tambour porte-broches (20).

18. Machine-outil selon l'une des revendications précédentes, caractérisée en ce que les ailettes de refroidissement (86) servent également à l'appui des stators (36) dans le tambour porte-broches (20).

19. Machine-outil selon l'une des revendications précédentes, caractérisée en ce que les ailettes de refroidissement (86) des stators (36) des moteurs principaux (28) des broches motrices (24) sont appliquées par zones les unes contre les autres.

20. Machine-outil selon l'une des revendications précédentes, caractérisée en ce que la broche de travail (24) supporte le rotor (32).
